# EUROPÄISCHE PATENTANMELDUNG

(11) **EP 3 626 906 A1**
(43) Veröffentlichungstag der Anmeldung: **25.03.2020**
(21) Anmeldenummer: 19198067.1
(22) Anmeldetag: 18.09.2019
(51) Int. Cl.: E04F 11/18, E04G 1/06, F16B 7/04

(54) **ROHRSTANGENSYSTEM, TREPPE, VERFAHREN ZUM VERBINDEN ZWEIER ROHRSTANGEN**

(30) Priorität: 18.09.2018 DE 102018007490; 21.12.2018 DE 102018009978; 21.12.2018 DE 202018005896 U
(71) Anmelder: Saage Treppenbau und Biegetechnik GmbH & Co. KG, 41334 Nettetal (DE)
(72) Erfinder: SAAGE, Detlev, 41334 Nettetal (DE); VYSKOCIL, Volker, 41334 Nettetal (DE)
(74) Vertreter: Tilmann, Max Wilhelm

(57) **Zusammenfassung**

Die Erfindung betrifft ein Rohrstangensystem mit einer ersten sich entlang einer Längsachse erstreckenden Rohrstange, die ein Ende aufweist, wobei das Ende eine in einem Winkel von <=90° zur Längsachse verlaufende Endfläche aufweist, und mit einer zweiten sich entlang einer Längsachse erstreckenden Rohrstange, die ein Ende aufweist, wobei das Ende eine in einem Winkel von <=90° zur Längsachse verlaufende Endfläche aufweist, wobei die erste Rohrstange mit ihrem Ende mit dem Ende der zweiten Rohrstange verbunden ist, wobei das Ende der ersten Rohrstange mindestens einen von der Endfläche der ersten Rohrstange vorspringenden Vorsprung aufweist, der in eine von der Endfläche der zweiten Rohrstange zurückspringende Ausnehmung eingreift.

## Beschreibung

Die Erfindung betrifft ein Rohrstangensystem, eine Treppe und ein Verfahren zum Verbinden zweier Rohrstangen.

Aus der Praxis sind Treppen bekannt, die ein Treppengeländer aufweisen, wobei das Treppengeländer Rohrstangen aufweist, die miteinander verbunden sind. Diese Rohrstangen werden häufig miteinander verschweißt. Schweißen als Verbindungsmethode für das Verbinden von Rohrstangen schränkt jedoch die Auswahl der Materialien ein, aus denen die Rohrstangen hergestellt werden können. Es müssen Materialien eingesetzt werden, die schweißbar sind. Auch ist es bekannt, Rohrstangen durch Kleben miteinander zu verbinden. Sowohl beim Schweißen, als auch beim Kleben müssen die miteinander zu verbindenden Rohrstangen jedoch während des Verbindens in der gewünschten Relativlage zueinander gehalten werden. Hierzu sind häufig Haltevorrichtungen notwendig, die diese Art des Verbindens aufwändig macht. Beim Schweißen und auch beim Kleben verbleiben zudem häufig Überstände, die über die Umfangsfläche der Rohrflächen überstehen. Diese stören die Anmutung und müssen häufig durch Schleifen oder andere Methoden entfernt werden.

Vor diesem Hintergrund lag der Erfindung die Aufgabe zugrunde, ein Rohrstangensystem, eine Treppe und ein Verfahren zum Verbinden zweier Rohrstangen vorzuschlagen, die sich einfacher verbinden lassen.

Diese Aufgabe wird jeweils durch die Gegenstände der Ansprüche 1, 10 und 11 gelöst. Vorteilhafte Ausführungsformen ergeben sich aus den Unteransprüchen und der hier nachfolgenden Beschreibung.

Die Erfindung geht von dem Grundgedanken aus, an dem einen der miteinander zu verbindenden Enden zumindest einen Vorsprung vorzusehen, der mit einer Ausnehmung an dem anderen der zu verbindenden Enden zusammenwirkt. Der in die Ausnehmung eingreifende Vorsprung kann das Ausrichten der Enden der Rohre zueinander unterstützten und vereinfachen. Selbst wenn als Verbindungsmethode ein Schweißen oder ein Kleben eingesetzt würde, könnte das Zusammenwirken zwischen Vorsprung und Ausnehmung bewirken, dass die Enden der Rohre während des Schweißens oder Klebens in einer gewünschten Ausrichtung zueinander verbleiben. Zudem kann durch die Wahl der Lage des Vorsprungs und der zugehörigen Ausnehmung eine bestimmte Relativlage der ersten Rohrstange relativ zur zweiten Rohrstange vorgegeben werden. Dadurch kann sichergestellt werden, dass die beiden Rohrstangen immer in der gewünschten Weise zueinander ausgerichtet zusammengesetzt werden. Die Erfindung erlaubt es, dass möglichst große Kräfte in Richtung Rohrstangenachse sowie Drehmomente um die Rohrstangenachse übertragen werden können. Die Montage der Rohrstangen bedarf keiner besonderen Schulung der Monteure.

Die Erfindung bezieht sich auf ein Rohrstangensystem. Als Rohrstangensystem wird ein System mit zumindest einer ersten sich entlang einer Längsachse erstreckenden Rohrstange und einer zweiten sich entlang einer Längsachse erstreckenden Rohrstange verstanden. Das System kann noch weitere Rohrstangen enthalten.

Als eine Rohrstange wird ein stangenförmiger Körper verstanden, der insbesondere als Teil von Tragwerken, wie beispielsweise Treppen, insbesondere von Treppengeländern oder beispielsweise bei Gerüsten eingesetzt wird. Die Rohrstange kann hohl sein. Dies führt insbesondere zu einer Gewichtsersparnis. Die Rohrstange kann aber auch als Vollkörper ausgeführt sein.

Die Rohrstange hat insbesondere einen runden, elliptischen, rechteckigen oder polygonalen Querschnitt senkrecht zur ihrer Längsachse. Insbesondere bevorzugt hat die Rohrstange eine konstante Ausdehnung senkrecht zur Längsachse. Bei einem runden Querschnitt hat sie insbesondere durchgängig den gleichen Durchmesser. Es sind aber auch Ausführungsformen denkbar, bei denen sich die Rohrstange zu einem Ende hin verjüngt oder sich von den Enden zu einer Mitte hin verjüngt (tailliert ausgeführt ist). Ist die Rohrstange hohl ausgeführt, so hat sie vorzugsweise durchgängig die gleiche Wandstärke.

Die Rohrstange ist insbesondere bevorzugt aus einem Metall oder aus einem nachwachsenden Rohstoff, insbesondere bevorzugt Holz, oder aus Kunststoff. In einer bevorzugten Ausführungsform sind die erste Rohrstange und die zweite Rohrstange aus dem gleichen Material. Es sind aber auch Ausführungsformen denkbar, bei denen mittels der Erfindung zwei Rohrstangen unterschiedlichen Materials miteinander verbunden werden.

Die erste Rohrstange weist ein Ende auf, das eine in einem Winkel von <=90° (kleiner oder gleich 90°) zur Längsachse verlaufende Endfläche aufweist. In einer bevorzugten Ausführungsform verläuft die Endfläche in einem Winkel von <=80°, insbesondere bevorzugt <=75°, insbesondere bevorzugt <=70°, insbesondere bevorzugt <=65°, insbesondere bevorzugt <=60°, insbesondere bevorzugt <=55°, insbesondere bevorzugt <=50° zur Längsachse. In einer bevorzugten Ausführungsform verläuft die Endfläche in einem Winkel von >=10°, insbesondere bevorzugt >=15°, insbesondere bevorzugt >=20°, insbesondere bevorzugt >=25°, insbesondere bevorzugt >=30°, insbesondere bevorzugt >=35°, insbesondere bevorzugt >=40° zur Längsachse. In einer besonders bevorzugten Ausführungsform verläuft die Endfläche in einem Winkel von 45° zur Längsachse.

Die zweite Rohrstange weist ein Ende auf, das eine in einem Winkel von <=90° zur Längsachse verlaufende Endfläche aufweist. In einer bevorzugten Ausführungsform verläuft die Endfläche in einem Winkel von <=80°, insbesondere bevorzugt <=75°, insbesondere bevorzugt <=70°, insbesondere bevorzugt <=65°, insbesondere bevorzugt <=60°, insbesondere bevorzugt <=55°, insbesondere bevorzugt <=50° zur Längsachse. In einer bevorzugten Ausführungsform verläuft die Endfläche in einem Winkel von >=10°, insbesondere bevorzugt >=15°, insbesondere bevorzugt >=20°, insbesondere bevorzugt >=25°, insbesondere bevorzugt >=30°, insbesondere bevorzugt >=35°, insbesondere bevorzugt >=40° zur Längsachse. In einer besonders bevorzugten Ausführungsform verläuft die Endfläche in einem Winkel von 45° zur Längsachse.

In einer bevorzugten Ausführungsform ist der Winkel zwischen der Längsachse der ersten Rohrstange und der Längsachse der zweiten Rohrstange <=180°, insbesondere bevorzugt <=160°, insbesondere bevorzugt <=140°, insbesondere bevorzugt <=120°, insbesondere bevorzugt <=110°, insbesondere bevorzugt <=105°, insbesondere bevorzugt <=100°. In einer bevorzugten Ausführungsform ist der Winkel zwischen der Längsachse der ersten Rohrstange und der Längsachse der zweiten Rohrstange >=0°, insbesondere bevorzugt >=20°, insbesondere bevorzugt >=40°, insbesondere bevorzugt >=60°, insbesondere bevorzugt >=70°, insbesondere bevorzugt >=75°, insbesondere bevorzugt >=80°. In einer bevorzugten Ausführungsform ist der Winkel zwischen der Längsachse der ersten Rohrstange und der Längsachse der zweiten Rohrstange =90°.

In einer bevorzugten Ausführungsform ist die Endfläche der jeweiligen Rohrstange mit Ausnahme von etwaigen Vorsprüngen oder Ausnehmungen eben ausgeführt.

Erfindungsgemäß ist die erste Rohrstange mit ihrem Ende mit dem Ende der zweiten Rohrstange verbunden.

In einer bevorzugten Ausführungsform ist die erste Rohrstange mit ihrem Ende mit dem Ende der zweiten Rohrstange verschweißt oder verklebt. In einer bevorzugten Ausführungsform ist die erste Rohrstange mit ihrem Ende mit dem Ende der zweiten Rohrstange nicht verschweißt und nicht verklebt oder nicht verschweißt, aber verklebt oder verschweißt, aber nicht verklebt.

Erfindungsgemäß weist das Ende der ersten Rohrstange mindestens einen von der Endfläche der ersten Rohrstange vorspringenden Vorsprung auf, der in eine von der Endfläche der zweiten Rohrstange zurückspringende Ausnehmung eingreift. Es sind Ausführungsformen denkbar, bei denen die erste Rohrstange nur einen einzigen Vorsprung aufweist. In einer bevorzugten Ausführungsform weist die erste Rohrstange jedoch mehrere Vorsprünge, insbesondere bevorzugt zwei, besonders bevorzugt mehr als zwei, insbesondere bevorzugt drei, besonders bevorzugt mehr als drei, insbesondere bevorzugt vier, besonders bevorzugt mehr als vier, insbesondere bevorzugt fünf, besonders bevorzugt mehr als fünf, insbesondere bevorzugt sechs, besonders bevorzugt mehr als sechs, insbesondere bevorzugt sieben, besonders bevorzugt mehr als sieben Vorsprünge auf. In einer bevorzugten Ausführungsform sind die Vorsprünge gleichmäßig über die Endfläche, insbesondere bevorzugt gleichmäßig in Umfangsrichtung der Endfläche verteilt. Es sind aber auch Ausführungsformen denkbar, bei denen die Anordnung zumindest eines Vorsprungs von einem ansonsten gleichmäßigen Muster der Anordnung der Vorsprünge abweicht. Durch dieses Abweichen wird erreicht, dass die Enden der beiden Rohrstangen nur in einer einzigen Lage miteinander verbunden werden können. Jeder Vorsprung greift in eine von der Endfläche der zweiten Rohrstange zurückspringende Ausnehmung ein.

In einer bevorzugten Ausführungsform weist das Ende der zweiten Rohrstange mindestens einen von der Endfläche der zweiten Rohrstange vorspringenden Vorsprung aufweist, der in eine von der Endfläche der ersten Rohrstange zurückspringende Ausnehmung eingreift. Es sind Ausführungsformen denkbar, bei denen die zweite Rohrstange nur einen einzigen Vorsprung aufweist. In einer bevorzugten Ausführungsform weist die zweite Rohrstange jedoch mehrere Vorsprünge, insbesondere bevorzugt zwei, besonders bevorzugt mehr als zwei, insbesondere bevorzugt drei, besonders bevorzugt mehr als drei, insbesondere bevorzugt vier, besonders bevorzugt mehr als vier, insbesondere bevorzugt fünf, besonders bevorzugt mehr als fünf, insbesondere bevorzugt sechs, besonders bevorzugt mehr als sechs, insbesondere bevorzugt sieben, besonders bevorzugt mehr als sieben Vorsprünge auf. In einer bevorzugten Ausführungsform sind die Vorsprünge gleichmäßig über die Endfläche, insbesondere bevorzugt gleichmäßig in Umfangsrichtung der Endfläche verteilt. Es sind aber auch Ausführungsformen denkbar, bei denen die Anordnung zumindest eines Vorsprungs von einem ansonsten gleichmäßigen Muster der Anordnung der Vorsprünge abweicht. Durch dieses Abweichen wird erreicht, dass die Enden der beiden Rohrstangen nur in einer einzigen Lage miteinander verbunden werden können. Jeder Vorsprung greift in eine von der Endfläche der ersten Rohrstange zurückspringende Ausnehmung ein.

In einer bevorzugten Ausführungsform haben der Vorsprung und die Ausnehmung, in die er eingreift, zumindest im Wesentlichen die gleiche Form, vorzugsweise die gleiche Form auf, so dass die Ausnehmung die Inverse des Vorsprungs ist. Es sind Ausführungsformen denkbar, bei denen der Vorsprung mit einer Presspassung in die Ausnehmung eingreift. Ebenso sind Ausführungsformen denkbar, bei denen der Vorsprung mit Spiel in die Ausnehmung eingreift, die Ausnehmung beispielsweise ein Übermaß von wenigen Zehntel Millimetern oder sogar von einem halbe Millimeter oder sogar von einem Millimeter hat.

In einer bevorzugten Ausführungsform ist der von der Endfläche der ersten Rohrstange vorspringenden Vorsprung unmittelbar neben der von der Endfläche der ersten Rohrstange zurückspringenden Ausnehmung angeordnet ist. Eine Seitenkante des Vorsprungs fluchtet insbesondere bevorzugt mit einer seitlichen Begrenzungsfläche der Ausnehmung.

In einer bevorzugten Ausführungsform weist der von der Endfläche der ersten Rohrstange vorspringende Vorsprung eine Außenoberfläche auf, die mit der Außenumfangsfläche der ersten Rohrstange fluchtet. Es sind auch Ausführungsformen denkbar, bei denen die Außenoberfläche des Vorsprungs in einem Winkel zur Außenumfangsfläche der ersten Rohrstange verläuft, der Vorsprung beispielsweise in einem Winkel radial nach innen verläuft oder in einem Winkel radial nach außen verläuft.

In einer bevorzugten Ausführungsform weist der von der Endfläche der ersten Rohrstange vorspringende Vorsprung eine Innenoberfläche auf, die mit der Innenumfangsfläche der ersten Rohrstange fluchtet. Es sind auch Ausführungsformen denkbar, bei denen die Innenoberfläche des Vorsprungs in einem Winkel zur Innenumfangsfläche der ersten Rohrstange verläuft, der Vorsprung beispielsweise in einem Winkel radial nach innen verläuft oder in einem Winkel radial nach außen verläuft.

In einer bevorzugten Ausführungsform erstreckt sich der von der Endfläche der ersten Rohrstange vorspringenden Vorsprung in eine Richtung senkrecht zur Endfläche der ersten Rohrstange.

In einer bevorzugten Ausführungsform ist die Abwicklung der Außenoberfläche und/oder der Innenoberfläche des von der Endfläche der ersten Rohrstange vorspringenden Vorsprungs in eine Ebene ein Polygon. Insbesondere bevorzugt hat die Abwicklung die Form eines Dreiecks oder eines Rechtecks, vorzugsweise eines Quadrats, oder die Form eines Trapezes. Es sind aber auch Kreisbogenformen oder Ellipsenbogenformen denkbar.

In einer bevorzugten Ausführungsform ist die Abwicklung der von der Endfläche der zweiten Rohrstange zurückspringenden Ausnehmung in eine Ebene ein Polygon. Insbesondere bevorzugt hat die Abwicklung die Form eines Dreiecks oder eines Rechtecks, vorzugsweise eines Quadrats, oder die Form eines Trapezes. Es sind aber auch Kreisbogenformen oder Ellipsenbogenformen denkbar. In einer bevorzugten Ausführungsform ist.

In einer bevorzugten Ausführungsform hat die Abwicklung der Außenoberfläche und/oder der Innenoberfläche des von der Endfläche der ersten Rohrstange vorspringenden Vorsprungs in eine Ebene die gleiche geometrische Form wie die Abwicklung der von der Endfläche der zweiten Rohrstange zurückspringenden Ausnehmung in diese Ebene. In einer bevorzugten Ausführungsform ist diese geometrische Form so gewählt, dass die Seiten der jeweiligen geometrischen Form nicht parallel zu der Längsachse sondern in einem Winkel zur Längsachse verlaufen. Bei den auch denkbaren Bauformen, bei denen die Seiten parallel zur Längsachse verlaufen, beispielsweise bei rechteckigen Vorsprüngen und Ausnehmungen müssen die Rohrstangen exakt zueinander ausgerichtet sein, damit sie zusammengefügt werden können. Verläuft die Seite des Vorsprungs und/oder der Ausnehmung schräg zur Längsachse, dann werden die Rohrstangen bei geringer Fehlstellungen, beispielsweise wenn sie verdreht zueinander stehen, bei der Montage zwangsläufig in die richtige Stellung gezogen.

In einer bevorzugten Ausführungsform weist der von der Endfläche der ersten Rohrstange vorspringende Vorsprung eine nach innen weisende Zentrierungsfläche aufweist, die in einem Winkel zur Außenoberfläche des Vorsprungs verläuft, und die von der Endfläche der zweiten Rohrstange zurückspringende Ausnehmung, in die der Vorsprung eingreift, als Tasche ausgeführt ist und eine nach außen weisende Zentrierungsfläche aufweist, die mit der Zentrierungsfläche des Vorsprungs zusammenwirkt.

In einer bevorzugten Ausführungsform ist die Endfläche der ersten Rohrstange ringförmig. Dies bietet sich insbesondere dann an, wenn die Rohrstange hohl ausgeführt ist. Eine ringförmig ausgeführte Endfläche lässt sich mit einer nach innen in das Innere des Endes der Rohrstange versetzten Abdeckplatte kombinieren. Die ringförmige Endfläche der ersten Rohrstange dient zur Anlage an einer ggf. ebenfalls ringförmig oder aber auch plattenförmig ausgeführten Endfläche der zweiten Rohrstange, während eine rückversetzte Abdeckplatte zum einen die Rohrstange verschließt und zum anderen als Trägerplatte für Elemente dienen kann, die zum Verbinden des Endes der ersten Rohrstange mit dem Ende der zweiten Rohrstange verwendet werden können, wie beispielsweise Schrauben.

In einer bevorzugten Ausführungsform ist die Endfläche der ersten Rohrstange eine die Rohrstange verschließende Abschlussplatte. Diese Abschlussplatte kann insbesondere an das Ende der Rohrstange angeschweißt oder angeklebt werden. Die Vorsprünge können an der Abschlussplatte ausgeführt sein. Die Vorsprünge können aber auch als Verlängerung der rohrförmigen Rohrstange ausgebildet sein, wobei die an das Ende der Rohrstange angebrachte Abschlussplatte im Bereich des Vorsprungs eine Auslassung aufweist. Die Abschlussplatte kann aus dem gleichen Material wie die Rohrstange sein. Die Abschlussplatte kann aber auch aus einem anderen Material als die Rohrstange sein.

In einer bevorzugten Ausführungsform ist ein mit der ersten Rohrstange verbundenes, über die Endfläche der ersten Rohrstange hinausragendes Verbindungselement vorgesehen, das in das Ende der zweiten Rohrstange hineinragt. Ferner ist ein Halteteil mit dem Teil des Verbindungselements verbunden, der in das Ende der zweiten Rohrstange hineinragt, wobei sich das Halteteil an einem Teil der zweiten Rohrstange abstützt, so dass das Verbindungselement nicht aus dem Ende der zweiten Rohrstange gezogen werden kann. Das Verbindungselement kann beispielsweise ein mit der Abschlussplatte verbundene Gewindestift sein. Das Verbindungselement kann auch eine Schraube sein, die mit ihrem Kopf von innen an der Abschlussplatte anliegt und durch ein Loch in der Abschlussplatte durchgreift. Das Verbindungselement kann auch ein Stift mit einem endseitigen Loch sein, in den ein als Splint ausgeführtes Halteteil eingeschoben werden kann. Der Stift mit endseitigem Loch kann mit der Abschlussplatte verbunden sein oder kann - vergleichbar einer Schraube - einen Kopf aufweisen, mit dem er von innen gegen die Abschlussplatte anliegt und durch ein Loch in der Abschlussplatte durchgreift. Das Halteteil kann ein Gewinde sein, beispielsweise das Gewinde einer in die Abschlussplatte eingeschnittenen Gewindebohrung. Das Halteteil kann auch eine Mutter sein. Die Mutter kann entweder an die Abschlussplatte angeschweißt sein oder zumindest von innen gegen die Abschlussplatte anliegen. Das Halteteil kann auch ein Splint sein.

In einer bevorzugten Ausführungsform ist ein im Bereich des Endes der zweiten Rohrstange an der zweiten Rohrstange Fenster vorgesehen, das einen Zugriff auf das Halteteil erlaubt.

Die erfindungsgemäße Treppe weist ein erfindungsgemäßes Rohrstangensystem auf. Insbesondere bevorzugt weist die Treppe ein Treppengeländer auf, dass das erfindungsgemäße Rohrstangensystem aufweist.

Das erfindungsgemäße Verfahren zum Verbinden zweier Rohrstangen, sieht vor, dass eine ersten sich entlang einer Längsachse erstreckenden Rohrstange, die ein Ende aufweist, wobei das Ende eine in einem Winkel von <=90° zur Längsachse verlaufende Endfläche aufweist, derart an eine zweite sich entlang einer Längsachse erstreckenden Rohrstange, die ein Ende aufweist, wobei das Ende eine in einem Winkel von <=90° zur Längsachse verlaufende Endfläche aufweist, angesetzt wird, dass ein von der Endfläche der ersten Rohrstange vorspringender Vorsprung in eine von der Endfläche der zweiten Rohrstange zurückspringende Ausnehmung eingreift.

In einer bevorzugten Ausführungsform wird zur Durchführung des Verfahrens ein erfindungsgemäßes Rohrstangensystem verwendet.

Nachstehend wird die Erfindung anhand einer lediglich Ausführungsbeispiele darstellende Zeichnung näher erläutert. Darin zeigt
- Fig.1: das erfindungsgemäße Rohrstangensystem in einer schematischen Seitenansicht im zusammengebauten Zustand,
- Fig. 2: das erfindungsgemäße Rohrstangensystem in einer schematischen Seitenansicht in einem Zustand, in dem das Ende der ersten Rohrstange noch nicht mit dem Ende der zweiten Rohrstange verbunden ist,
- Fig. 3: das erfindungsgemäße Rohrstangensystem nach Fig. 1 in einer schematischen, perspektivischen Ansicht,
- Fig. 4: das erfindungsgemäße Rohrstangensystem nach Fig. 1 in einer schematischen, perspektivischen, entlang der Linie D-D in Fig. 3 geschnittenen Ansicht,
- Fig. 5: das erfindungsgemäße Rohrstangensystem nach Fig. 1 in einer schematischen geschnittenen Ansicht,
- Fig. 6: das erfindungsgemäße Rohrstangensystem nach Fig. 1 in einer schematischen geschnittenen Ansicht gemäß einer weiteren Ausführungsform,
- Fig. 7: das erfindungsgemäße Rohrstangensystem in einer weiteren Ausführungsform in einer schematischen Seitenansicht in einem Zustand, in dem das Ende der ersten Rohrstange noch nicht mit dem Ende der zweiten Rohrstange verbunden ist und
- Fig. 8: das erfindungsgemäße Rohrstangensystem in einer weiteren Ausführungsform in einer schematischen Seitenansicht in einem Zustand, in dem das Ende der ersten Rohrstange noch nicht mit dem Ende der zweiten Rohrstange verbunden ist.

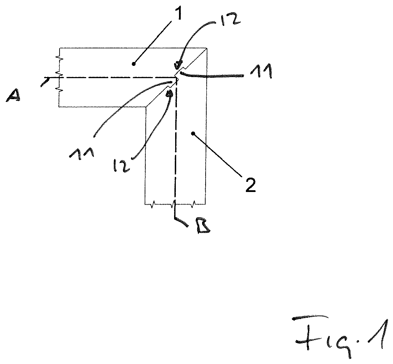

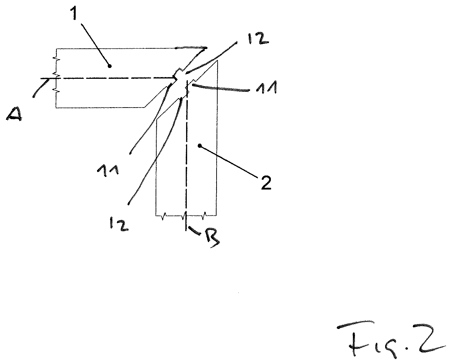

Das in Fig. 1 und 2 dargestellte Rohrstangensystem weist eine erste sich entlang einer Längsachse erstreckende Rohrstange 1 auf, die ein Ende aufweist, wobei das Ende eine in einem Winkel von 45° zur Längsachse verlaufende Endfläche aufweist. Ferner weist das Rohrstangensystem eine zweite sich entlang einer Längsachse A erstreckende Rohrstange 2 auf, die ein Ende aufweist, wobei das Ende eine in einem Winkel von 45° zur Längsachse B verlaufende Endfläche aufweist. Die erste Rohrstange ist mit ihrem Ende mit dem Ende der zweiten Rohrstange verbunden. Das Ende der ersten Rohrstange weist einen von der Endfläche der ersten Rohrstange vorspringenden Vorsprung 11 auf, der in eine von der Endfläche der zweiten Rohrstange zurückspringende Ausnehmung 12 eingreift.

In die Rohrstangenenden werden Platten 4; 5 eingeschweißt. Diese liegen parallel und um einen gewissen Betrag zurück versetzt zu den Schnittkanten der Rohrstangenenden. Durch das Zurückversetzen der Platten 4; 5 kann die Schweißung so ausgeführt werden, dass keine Nacharbeit der Schweißnaht erforderlich ist.

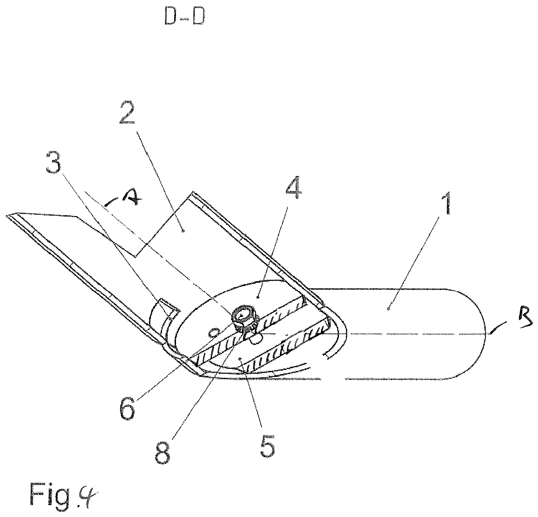

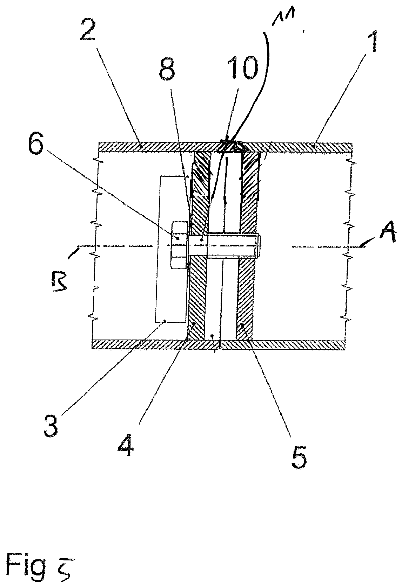

Beide Platten (siehe Fig. 4, 5) können mit Hilfe mindestens einer Schraube 6 miteinander verbunden werden, die aus Gründen der Übersichtlichkeit in den Fig. 1 und 2 nicht dargestellt ist.

Die Lage der Platten (siehe Fig. 4, 5) zueinander, wird durch die Vorsprünge 11 und ihr Zusammenwirken mit den ihnen jeweils zugeordneten Ausnehmungen sichergestellt. Durch diese Anordnung wird auch sichergestellt, dass zu übertragende Drehmomente nicht dazu führen, dass die Verschraubung gelockert wird.

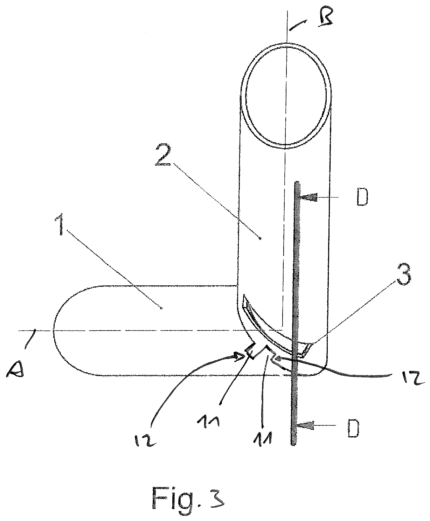

Durch einen (siehe Fig. 3, 4, 5) Fensterausschnitt 3 in einem der zu verbindenden Rohrstangen kann ein Ringratschenschlüssel oder ein Maulratschenschlüssel geführt und somit die Verbindungsschraube 6 angezogen werden.

Der Fensterausschnitt kann nach erfolgter Montage durch eine Blende verschlossen werden.

Eine Ausführungsform der Erfindung besteht darin (siehe Fig. 3), die Befestigungsschrauben 6 mit einem Ansatz 10 zu versehen sowie die Platte, die eigentlich die Durchgangslöcher für diese Schraube aufweist, mit entsprechenden Gewinden zu versehen, so dass, wenn die Schrauben bis zum Ansatz in diese Platte eingeschraubt werden, diese nicht mehr verloren gehen können.

Eine weitere Ausführungsform (siehe Fig. 2, 3) der Erfindung besteht darin, dass unter die Befestigungsschraube 6 ein Federelement 8 gelegt wird, bevor diese bis zum Ansatz in die erste Platte geschraubt werden. Dies führt dazu, dass die Schraube nur unter Aufbringung eines Mindestdrehmoments zu bewegen ist, was die Montage mit Ringratschenschlüsseln erleichtert.

Eine andere Ausführungsform der Erfindung besteht darin, eine der Platten mit einer Art Schlüsselloch zu versehen in der Form, dass bei der Montage der Schraubenkopf der Befestigungsschraube durch dieses Schlüsselloch geführt werden kann, um dadurch den Montagevorgang zu beschleunigen.

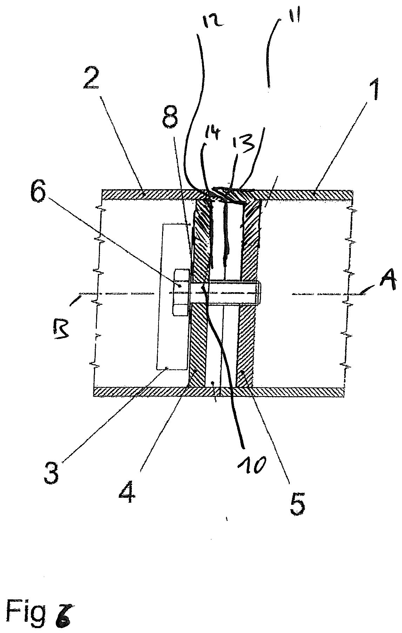

Fig. 6 zeigt, dass der von der Endfläche der ersten Rohrstange 1 vorspringenden Vorsprung 11 eine nach innen weisende Zentrierungsfläche 13 aufweist, die in einem Winkel zur Außenoberfläche des Vorsprungs 11 verläuft, und die von der Endfläche der zweiten Rohrstange 2 zurückspringende Ausnehmung 12, in die der Vorsprung 11 eingreift, als Tasche ausgeführt ist und eine nach außen weisende Zentrierungsfläche 14 aufweist, die mit der Zentrierungsfläche 13 des Vorsprungs 11 zusammenwirkt.

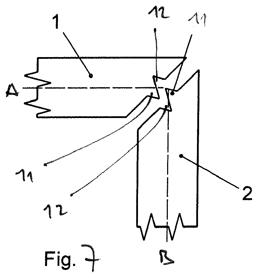

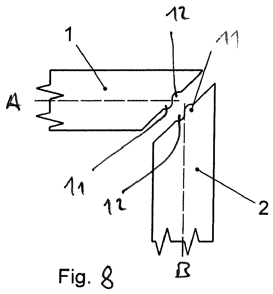

Die Fig. 7 und 8 zeigen in Darstellungen vergleichbar der Darstellung der Fig. 2 weitere Ausführungsformen des erfindungsgemäßen Systems. Bei der Ausführungsform der Fig. 7 sind die Ausnehmungen 12 und die Vorsprünge 11 dreieckig ausgeführt. Bei der Ausführungsform der Fig. 8 sind die Ausnehmungen 12 und die Vorsprünge 11 halbkreisförmig ausgeführt.

## Patentansprüche

1. Rohrstangensystem mit
• einer ersten sich entlang einer Längsachse (A) erstreckenden Rohrstange (1), die ein Ende aufweist, wobei das Ende eine in einem Winkel von <=90° zur Längsachse (A) verlaufende Endfläche aufweist,
• einer zweiten sich entlang einer Längsachse (B) erstreckenden Rohrstange (2), die ein Ende aufweist, wobei das Ende eine in einem Winkel von <=90° zur Längsachse (B) verlaufende Endfläche aufweist,
wobei die erste Rohrstange (1) mit ihrem Ende mit dem Ende der zweiten Rohrstange (2) verbunden ist, **dadurch gekennzeichnet, dass** das Ende der ersten Rohrstange (1) mindestens einen von der Endfläche der ersten Rohrstange (1) vorspringenden Vorsprung (11) aufweist, der in eine von der Endfläche der zweiten Rohrstange (2) zurückspringende Ausnehmung (12) eingreift.

2. Rohrstangensystem nach Anspruch 1, **dadurch gekennzeichnet, dass** das Ende der zweiten Rohrstange (2) mindestens einen von der Endfläche der zweiten Rohrstange (2) vorspringenden Vorsprung (11) aufweist, der in eine von der Endfläche der ersten Rohrstange (1) zurückspringende Ausnehmung (12) eingreift.

3. Rohrstangensystem nach Anspruch 2, **dadurch gekennzeichnet, dass** der von der Endfläche der ersten Rohrstange (1) vorspringenden Vorsprung (11) unmittelbar neben der von der Endfläche der ersten Rohrstange (1) zurückspringenden Ausnehmung (12) angeordnet ist.

4. Rohrstangensystem nach einem der Ansprüche 1 bis 3, **dadurch gekennzeichnet, dass** der von der Endfläche der ersten Rohrstange (1) vorspringenden Vorsprung (11) eine nach innen weisende Zentrierungsfläche (13) aufweist, die in einem Winkel zur Außenoberfläche des Vorsprungs (11) verläuft, und die von der Endfläche der zweiten Rohrstange (2) zurückspringende Ausnehmung (12), in die der Vorsprung (11) eingreift, als Tasche ausgeführt ist und eine nach außen weisende Zentrierungsfläche (14) aufweist, die mit der Zentrierungsfläche (13) des Vorsprungs (11) zusammenwirkt.

5. Rohrstangensystem nach einem der Ansprüche 1 bis 4, **dadurch gekennzeichnet, dass** die Endfläche der ersten Rohrstange (1) eine die Rohrstange verschließende Abschlussplatte (5) ist.

6. Rohrstangensystem nach einem der Ansprüche 1 bis 5, **dadurch gekennzeichnet, dass** ein mit der ersten Rohrstange (1) verbundenes, über die Endfläche der ersten Rohrstange (1) hinausragendes Verbindungselement in das Ende der zweiten Rohrstange (2) hineinragt und ein Halteteil mit dem Teil des Verbindungselements verbunden ist, der in das Ende der zweiten Rohrstange (2) hineinragt, und sich das Halteteil an einem Teil der zweiten Rohrstange (2) abstützt, so dass das Verbindungselement nicht aus dem Ende der zweiten Rohrstange (2) gezogen werden kann.

7. Rohrstangensystem nach Anspruch 6, **gekennzeichnet durch** ein im Bereich des Endes der zweiten Rohrstange (2) an der zweiten Rohrstange (2) vorgesehenes Fenster (3), das einen Zugriff auf das Halteteil erlaubt.

8. Treppe mit einem Rohrstangensystem nach einem der Ansprüche 1 bis 7.

9. Verfahren zum Verbinden zweier Rohrstangen, **dadurch gekennzeichnet, dass** eine ersten sich entlang einer Längsachse (A) erstreckenden Rohrstange (1), die ein Ende aufweist, wobei das Ende eine in einem Winkel von <=90° zur Längsachse (A) verlaufende Endfläche aufweist, derart an eine zweite sich entlang einer Längsachse (B) erstreckenden Rohrstange (2), die ein Ende aufweist, wobei das Ende eine in einem Winkel von <=90° zur Längsachse (B) verlaufende Endfläche aufweist, angesetzt wird, dass ein von der Endfläche der ersten Rohrstange (1) vorspringender Vorsprung (11) in eine von der Endfläche der zweiten Rohrstange (2) zurückspringende Ausnehmung (12) eingreift.

10. Verfahren nach Anspruch 9, **dadurch gekennzeichnet, dass** zur Durchführung des Verfahrens ein Rohrstangensystem nach einem der Ansprüche 1 bis 7 verwendet wird.
